# EUROPÄISCHE PATENTANMELDUNG

(11) **EP 1 310 704 A1**
(43) Veröffentlichungstag der Anmeldung: **14.05.2003**
(21) Anmeldenummer: 02024344.0
(22) Anmeldetag: 02.11.2002
(51) Int. Cl.: F16H 29/04

(54) **Fahrzeuggetriebe mit stufenlos veränderbarer Übersetzung zwischen einer Eingangswelle und einer Ausgangswelle**

(30) Priorität: 12.11.2001 AT 17762001
(71) Anmelder: Heinzle, Friedrich, 6800 Feldkirch (AT)
(72) Erfinder: Nagel, Edmund Ferdinand, 6800 Feldkirch (AT)
(74) Vertreter: Hefel, Herbert, Dipl.-Ing.

(57) **Zusammenfassung**

Ein Fahrzeuggetriebe mit stufenlos veränderbarer Übersetzung weist mindestens einen um eine stationäre Achse (9) verschwenkbar gelagerten Pendelarm (8), der mittels eines verstellbaren Exzenters (3) in eine wechselweise Verschwenkbewegung in beide Verschwenkrichtungen versetzbar ist, und mindestens eine drehrichtungsabhängige Kupplungseinrichtung (14) mit einem eingangsseitigen Teil (35), welches von dem mindestens einen Pendelarm (8) in eine wechselweise Drehbewegung in beide Drehrichtungen versetzbar ist, und einem ausgangsseitigen Teil (36), das mit der Ausgangswelle in Verbindung steht, auf. Im Übertragungsweg des Getriebes ist ein Torsionsfederelement (17, 18) angeordnet, wobei bei einer Verdrehung des Torsionsfederelements (17, 18) dieses eine in Richtung der Aufhebung dieser Verdrehung wirkende federelastische Rückstellkraft ausübt.

## Beschreibung

Die Erfindung betrifft ein Fahrzeuggetriebe mit stufenlos veränderbarer Übersetzung zwischen einer Eingangswelle (1) und einer Ausgangswelle (15) zum Antrieb von mindestens einem Fahrzeugrad (31), mit mindestens einem um eine stationäre Achse (9) verschwenkbar gelagerten Pendelarm (8), der um diese Achse (9) mittels eines Exzenters (3) bei einer Drehung der Eingangswelle (1) in eine wechselweise Verschwenkbewegung in beide Verschwenkrichtungen versetzbar ist, deren Schwenkwinkel zur Änderung der Übersetzung durch Änderung der Exzentrizität des Exzenters (3) veränderbar ist, und mindestens einer drehrichtungsabhängigen Kupplungseinrichtung (14) mit einem eingangsseitigen Teil (35), welches von dem mindestens einem Pendelarm (8) in eine wechselweise Drehbewegung in beide Drehrichtungen versetzbar ist, und einem ausgangsseitigen Teil (36), das mit der Ausgangswelle (15) in Verbindung steht, wobei in Abhängigkeit von der Drehrichtung des eingangsseitigen Teils (35) oder in Abhängigkeit von der relativen Drehrichtung zwischen dem eingangsseitigen Teil (35) und dem ausgangsseitigen Teil (36) entweder eine Übertragung der Drehbewegung des eingangsseitigen Teils (35) auf das ausgangsseitige Teil (36) oder ein Freilauf zwischen dem eingangsseitigen Teil (35) und dem ausgangsseitigen Teil (36) erfolgt.

Bekannt sind Einrichtungen zum Umsetzen einer Drehbewegung in eine lineare hin- und hergehende Bewegung, beispielsweise aus der DE-OS 2 523 260. Weiters sind Getriebe zur Umwandlung einer hin- und hergehenden linearen Bewegung in eine Drehbewegung bekannt, beispielsweise aus der DE-PS 817 980.

Bei herkömmlichen Fahrzeuggetrieben zur stufenlosen Änderung der Übersetzung zwischen einer Eingangswelle und einer Ausgangswelle des Getriebes werden üblicherweise reibschlüssige oder hydraulische Kraftübertragungen eingesetzt, wodurch sich der Wirkungsgrad verringert.

Ein weiteres Fahrzeuggetriebe mit stufenlos veränderbarer Übersetzung ist aus der FR-PS 1,085,731 bekannt. Dieses weist einen Pendelarm auf, der einerseits mit einer Zahnstange verschwenkbar verbunden ist, andererseits mit einem von der Eingangswelle des Getriebes angetriebenen Exzenter in Verbindung steht.

Dieses Ende des Hebels ist verschwenkbar an einer von der Eingangswelle radial abstehenden Exzenterstange festgelegt, wobei zur Verstellung der Übersetzung der radiale Abstand des Anlenkpunktes des Hebels an der Exzenterstange von der Eingangswelle verstellbar ist. Die Zahnstange, mit der das andere Ende des Hebels verschwenkbar verbunden ist, führt eine lineare hin- und hergehende Bewegung aus, wobei sie mit zwei Zahnrädern von in entgengegesetzte Richtungen wirkenden Freilaufkupplungen kämmt. Jede der Freilaufkupplungen setzt dabei eine der beiden Bewegungsrichtungen der linearen Bewegung der Zahnstange in eine Drehbewegung um einen entsprechenden Winkelbetrag der Ausgangswelle um, wobei eine gleichsinnige Drehrichtung der Ausgangswelle vorliegt. Durch die eine hin- und hergehende Bewegung ausführende Zahnstange, die über Zahneingriff mit den Freilaufkupplungen in Verbindung steht, kommt es bei diesem Getriebe zu relativ großen Verlusten.

Aus der Landwirtschaft bekannt sind weiters auf einer Ladefläche eines Anhängers vorgesehene Fördereinrichtungen zum schrittweisen Transportieren des geladenen Materials (organischer Dünger) zur rückseitig am Anhänger angeordneten Abgabevorrichtung. Eine vom Zugfahrzeug angetriebene Welle treibt einen Exzenter an, der einen Hebel in eine wechselweise Verschwenkbewegung in beide Schwenkrichtungen versetzt. Am Hebel ist eine nach Art einer Ratsche mit einem Zahnrad zusammenwirkende Klaue vorgesehen, wodurch eine Art Freilaufkupplung gebildet wird. Deren Ausgangswelle treibt die Fördereinrichtung schrittweise an. Durch Veränderung der Länge des wirksamen Hebelarms des Hebels kann die Schrittweite verstellt werden.

Getriebe der eingangs genannten Art sind weiters aus der WO 94/01698 A1 und der SU 643 691 bekannt.

Aufgabe der Erfindung ist es ein verbessertes Fahrzeuggetriebe der eingangs genannten Art bereitzustellen, bei dem ein relativ kontinuierlicher Antrieb der Ausgangswelle erreicht werden kann, wobei der Aufbau relativ einfach sein kann. Erfindungsgemäß gelingt dies durch ein Fahrzeuggetriebe mit den Merkmalen des Anspruchs 1.

Solche Torsionsfederelemente sind in unterschiedlichen Formen unter anderem als Torsionsstäbe, Drehstabfedern oder Torsionsfedern insbesondere für Federungszwecke bekannt, beispielsweise als Federelemente zur Federung von Fahrzeugrädern.

Das Torsionsfederelement kann in der Eingangswelle und/oder in der Ausgangswelle und/oder zwischen anderen Teilen im Übertragungsweg zwischen Eingangswelle und Ausgangswelle angeordnet sein, beispielsweise zwischen der Eingangswelle und dem Exzenter oder zwischen der drehrichtungsabhängigen Kupplungseinrichtung und der Ausgangswelle.

Weitere Vorteile und Einzelheiten der Erfindung werden im folgenden anhand der in der beiliegenden Zeichnung dargestellten Ausführungsbeispiele erläutert. In der Zeichnung zeigen:
- Fig. 1: eine stark schematisierte (perspektivische) Darstellung einer Ausführungsform eines erfindungsgemäßen Fahrzeuggetriebes;
- Fig. 2: eine ähnliche Ausführungsform in einer etwas detaillierteren Darstellung;
- Fig. 3: eine stark schematisierte Darstellungen einer weiteren Ausführungsform eines erfindungsgemäßen Fahrzeuggetriebes;
- Fig. 4: eine weitere Ausführungsform einer drehrichtungsabhängigen Kupplungseinrichtung;
- die Fig. 5 und 6: Drehmomentverläufe bei der Verwendung von einem und zwei Übertragungszweigen und
- Fig. 7: eine schematisierte Darstellung eines weiteren Ausführungsbeispiels eines erfindungsgemäßen Fahrzeuggetriebes.

In den Figuren sind äquivalente oder zumindest ähnlich wirkende Teile mit den gleichen Bezugszeichen versehen.

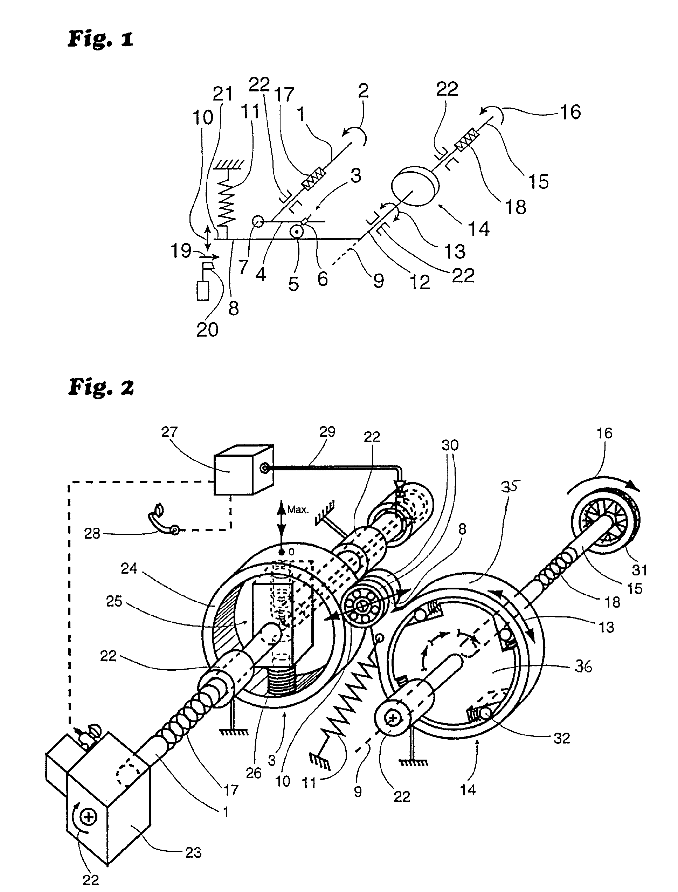

Anhand der in Fig. 1 dargestellten, stark schematisierten Darstellung einer Ausführungsform eines erfindungsgemäßen Fahrzeuggetriebes soll die grundsätzliche Funktionsweise des Fahrzeuggetriebes erläutert werden. Der Pfeil 2 deutet die Drehrichtung der angetriebenen Eingangswelle 1 des Fahrzeuggetriebes an. Am Ende der Eingangswelle 1 ist ein Exzenter 3 vorgesehen, der einen von der Eingangswelle radial abstehenden Exzenterstab 4 und eine Exzenterrolle 5 umfaßt. Die Exzenterrolle 5 ist an einem Lagerbock 6 drehbar gelagert, der seinerseits entlang des Exzenterstabes 4 verschiebbar ist. Auf der der Exzenterrolle 5 gegenüberliegenden Seite des Exzenterstabes 4 ist ein (gegebenenfalls ebenfalls in Achsialrichtung des Exzenterstabes verschiebbar gelagertes) Gegengewicht 7 vorgesehen. Der Exzenter wirkt auf einen Pendelarm 8, der um eine stationäre Achse 9 verschwenkbar gelagert ist und versetzt diesen Pendelarm 9 in eine wechselweise Schwenkbewegung in die beiden Schwenkrichtungen, wie dies durch den Doppelpfeil 10 angedeutet ist. die Auslenkung der Schwenkbewegung in die beiden Schwenkrichtungen hängt dabei von der Lage der Exzenterrolle 5 am Exzenterstab 4 ab. Damit der Pendelarm 8 bei der Aufwärtsbewegung der Exzenterrolle 5 dieser nachfolgt, ist eine auf das freie Ende des Pendelarms 8 wirkende Zugfeder 11 vorgesehen.

Die stationäre Achse 9 des Pendelarms 8 wird von einer Welle 12 gebildet, die somit vom Pendelarm 8 in eine wechselweise Drehbewegung in beide Drehrichtungen versetzt wird, wie durch den Doppelpfeil 13 angedeutet ist. Die Welle 12 ist mit einer drehrichtungsabhängigen Kupplungseinrichtung 14, beispielsweise in Form einer herkömmlichen Freilaufkupplung verbunden, die in die eine Drehrichtung der Welle 12 eine Ausgangswelle 15 antreibt, während in die andere Drehrichtung der Welle 12 kein Antrieb der Ausgangswelle 15 erfolgt, die Drehbewegung der Ausgangswelle 15 erfolgt somit immer in die gleiche Richtung, das heißt gleichsinnig, wie durch den Pfeil 16 angedeutet ist.

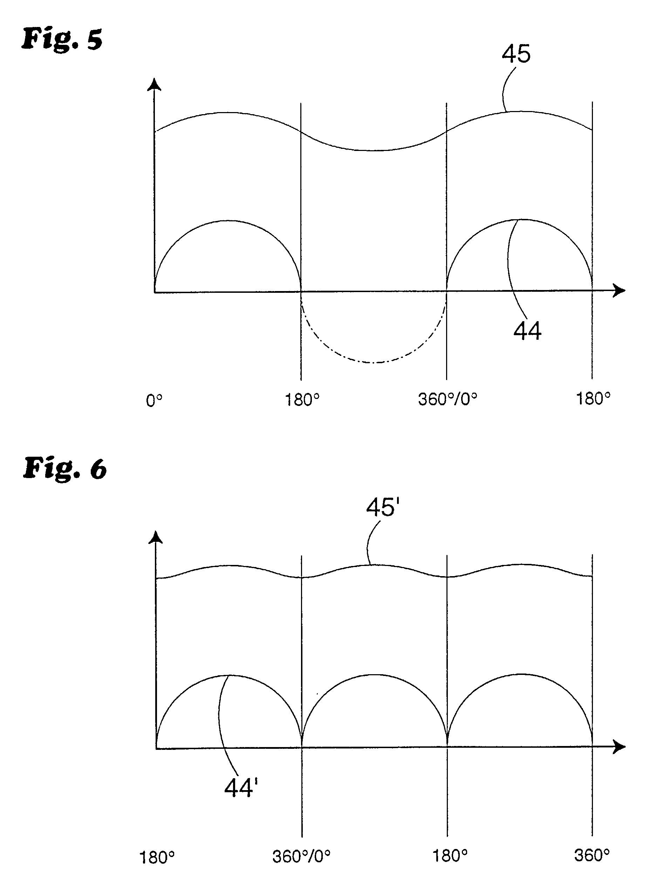

Damit die an der Eingangswelle 1 anliegende Last und das an der Ausgangswelle 15 anliegende Drehmoment weniger stufig ausgebildet sind und einen kontinuierlicheren Verlauf aufweisen, sind in der Eingangswelle 1 und in der Ausgangswelle 15 Torsionsfederelemente 17,18 angeordnet, die die Eingangswelle 1 und die Ausgangswelle 15 jeweils in zwei Teilwellen unterteilen. Bei einer Verdrehung der beiden Teilwellen gegeneinander übt das Torsionsfederelement eine federelastische Rückstellkraft aus. Die dem Exzenter 3 benachbarte Teilwelle der Eingangswelle läuft somit während der halben Umdrehung, in der aufgrund des Widerstandes des Freilaufes 14 eine Last anliegt, der auf der anderen Seite des Torsionsfederelementes 17 angeordneten Teilwelle nach. In der anderen Hälfte der Umdrehung wird dieser Nachlauf durch die federelastische Kraft des Torsionsfederelementes 17 wieder ausgeglichen. Insgesamt tritt somit eine Glättung auf. Ein analoger Effekt tritt auch bei der Ausgangswelle 15 auf, wie weiter unten noch anhand der Beschreibung der Fig. 5 und 6 deutlich werden wird.

Wenn die Exzentrizität der Eingangsrolle aufhebbar ist, indem diese in den Mittelpunkt der Eingangswelle 1 verschoben wird, erfolgt keine Auslenkung des Pendelarms 8 mehr, so daß auf diese Weise ein Leergang des Fahrzeuggetriebes verwirklicht werden kann. Eine separate Kupplungseinrichtung ist hierbei nicht erforderlich.

Zur plötzlichen Unterbrechung der Kraftübertragung auf die Ausgangswelle 15 ist weiters eine Einrichtung zur Feststellung des Pendelarms 8 in der am weitesten vom Exzenter beabstandeten Position vorgesehen. Diese wird von einer in Richtung des Pfeils 19 einschwenkbaren Rastklinke 20 gebildet, in die im eingeschwenkten Zustand das freie Ende 21 des Pendelarms 8 in seiner vollständig nach unten verschwenkten Position einrastet.

In Fig. 1 ist jeweils nur eines der Lager 22 für die Eingangswelle 1, für die Welle 12 und für die Ausgangswelle 15 schematisch eingezeichnet.

In Fig. 2 ist eine ähnliche Ausführungsform eines erfindungsgemäßen Fahrzeuggetriebes in etwas größerem Detail dargestellt, wobei das Fahrzeuggetriebe schematisch in den Antriebsstrang für ein Fahrzeug eingebaut ist. Von einem Antriebsmotor 23 wird eine Eingangswelle 1 des Getriebes in eine rotierende Bewegung versetzt. In der Eingangswelle ist wiederum ein Torsionsfederelement 17 angeordnet und die Eingangswelle ist mit einem Exzenter 3 verbunden. Dieser weist einen ringförmigen Mantel 24 aus einem etwas flexiblen bzw. elastischen Material auf. Im Inneren dieses ringförmigen Mantels ist eine in radialer Richtung ausgerichtete Kolben-Zylinder-Einheit 25 angeordnet, die auf der Eingangswelle 1 festgelegt ist und mit dieser mitrotiert. Die Kolben-Zylinder-Einheit 25 weist zwei radial angeordnete und diametral gegenüberliegende Tauchkolben 26 auf, deren aus dem Zylindergehäuse herausragende Enden an den gegenüberliegenden Innenseiten des Mantels 24 anliegen. Die Tauchkolben 26 sind über eine Steuereinheit 27 über eine Hydraulikleitung 29 beaufschlagbar (in Abhängigkeit von der Stellung eines Betätigungselements 28, beispielsweise eines Gaspedals). In der vollständig zurückgezogenen Stellung der Tauchkolben 26 ist die Kontur des Mantels 24 kreisringförmig. Dies entspricht dem Leergang des Fahrzeuggetriebes. Bei mehr oder weniger weit ausgefahrenen Tauchkolben 26 weicht die Außenkontur des Mantels 24 vom kreisförmigen Querschnitt ab und wird ähnlich einer mehr oder weniger stark ausgeprägten Ellipse.

Am Mantel 24 liegen im Bereich des freien Endes eines Pendelarmes 8 drehbare gelagerte Rollen 30 an. Der Pendelarm 8 ist um die Achse 9 verschwenkbar gelagert. Hierzu ist er am eingangsseitigen Teil 35 der drehrichtungsabhängigen Kupplungseinrichtung 14 befestigt. Die drehrichtungsabhängige Kupplungseinrichtung 14 ist hier wiederum als Freilaufkupplung ausgebildet. Eine solche Freilaufkupplung weist ein drehbar gelagertes eingangsseitiges Teil 35 und ein drehbar gelagertes ausgangsseitiges Teil 36 auf. In Abhängigkeit von der relativen Drehrichtung zwischen dem eingangsseitigen Teil 35 und dem ausgangsseitigen Teil 36 wird die Drehbewegung des eingangsseitigen Teils 35 entweder auf das ausgangsseitige Teil 36 übertragen oder eine solche Übertragung findet nicht statt, das heißt es erfolgt ein Freilauf zwischen dem eingangsseitigen Teil und dem ausgangsseitigen Teil.

Durch den Exzenter 3 wird der Pendelarm 8 wiederum in eine wechselweise Verschwenkbewegung in beide Schwenkrichtungen versetzt. Die Feder 11 beaufschlagt den Pendelarm 8 in Richtung zum Mantel 24. Die Verschwenkbewegung des Pendelarms 8 wird auf das eingangsseitige Teil 35 übertragen. Das ausgangsseitige Teil 36 ist starr mit der drehbar gelagerten Ausgangswelle 15 verbunden. In dieser Ausgangswelle 15 ist wiederum ein Torsionsfederelement 18 angeordnet. Grundsätzlich denkbar und möglich wäre es auch, daß ein Torsionsfederelement zwischen dem ausgangsseitigen Teil 36 und der Ausgangswelle 15 angeordnet ist oder zwischen zwei über das Torsionsfederelement verbundenen Teilen des ausgangsseitigen Teils 36, die beispielsweise konzentrisch zueinander angeordnet sein können.

Durch die Steuereinheit 27, welche den Antriebsmotor 23 und den Exzenter 3 ansteuert, kann ein mittels eines erfindungsgemäßen Fahrzeuggetriebes verwirklichtes, sehr einfach aufgebautes Automatikgetriebe bereitgestellt werden.

Die drehrichtungsabhängige Kupplungseinrichtung 14 kann von einer Freilaufkupplung mit einem herkömmlichen Aufbau gebildet sein, beispielsweise mit dem in Fig. 2 schematisch dargestellten handelsüblichen Aufbau mit federbeaufschlagten Klemmrollen, die sich in die Sperrichtung gegen die innere Mantelfläche des eingangsseitigen Teils 35 verklemmen. Das ausgangsseitige Teil 36 der Freilaufkupplung weist in dieser verklemmten Stellung praktisch keinen Schlupf gegenüber dem eingangsseitigen Teil 35 auf, sodaß von einer quasi formschlüssigen Verbindung der beiden Teile 35, 36 gesprochen werden kann. Ein erfindungsgemäßes Fahrzeuggetriebe kann in diesem Sinn ohne reibschlüssig wirkende Übertragungselemente auskommen.

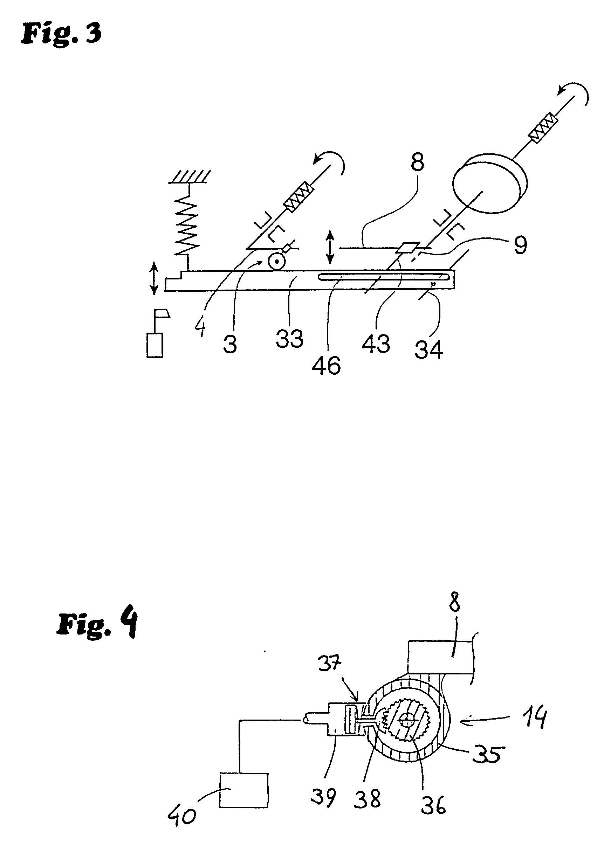

Der Übertragungsweg von der Eingangswelle über den mindestens einen Exzenter zum Pendelarm und weiter zum Freilauf und zur Ausgangswelle kann durch Zwischenschaltung von Übertragungselementen in verschiedener Weise modifiziert werden. Nur als Beispiel soll die schematische Darstellung von Fig. 3 dienen. Hier wirkt der Exzenter 3 auf einen einarmigen Hebel 33, der verschwenkbar um die Schwenkachse 34 gelagert ist. Der Exzenter 3 ist entlang des Exzenterstabes 4 verstellbar ausgebildet. Am Pendelarm 8 ist ein Kuppelstab 43 gelagert, der in achsialer Richtung des Pendelarms 8 verschiebbar sein kann, wobei er in eine Langlochausnehmung 46 im Hebel 33 eingreift. Durch eine Verschiebung des Kuppelstabes 43 entlang des Pendelarms 8 werden der ausgangsseitige Kraftarm des Hebels 33 sowie die wirksame Länge des Pendelarms 8, d.h. die Lage des Angriffspunktes des Kupplungsstabes 43 am Pendelarm 8 relativ zur Schwenkachse 9 geändert, wodurch sich eine weitere Änderung des Übersetzungsverhältnisses ergibt. Anstelle der Verschiebbarkeit des Kuppelstabes 43 könnte auch der Hebel 33 mitsamt seiner Schwenkachse 34 verschiebbar gelagert sein. Wenn der Hebel 33 hierbei soweit verschiebbar ist, daß der Kuppelstab 43 mit der Schwenkachse 34 zusammenfällt, ist der ausgangsseitige Kraftarm des Hebels 33 auf Null gestellt, wodurch ein Leergang realisierbar ist.

Eine weitere Ausführungsform einer drehrichtungsabhängigen Kupplungseinrichtung 14, die im Zusammenhang mit einem erfindungsgemäßen Fahrzeuggetriebe einsetzbar ist, ist in Fig. 4 schematisch dargestellt. Die drehrichtungsabhängige Kupplungseinrichtung 14 ist hier derart ausgebildet, daß bei einer Drehung des eingangsseitigen Teils 35 in die erste Drehrichtung eine Mitnahme des ausgangsseitigen Teils 36 erfolgt und zwar unabhängig von der relativen Drehrichtung zwischen diesen Teilen 35, 36, und daß bei einer Drehung des eingangsseitigen Teils 35 in die andere Drehrichtung ein Freilauf zwischen diesen beiden Teilen 35, 36 erfolgt. Hierzu ist am eingangsseitigen Teil 35 ein steuerbares Eingriffsteil 37 vorgesehen, das in der geschlossenen Stellung der Kupplung drehfest mit dem ausgangsseitigen Teil 36 verbunden ist. Dadurch wird im geschlossenen Zustand der Kupplungseinrichtung 14 eine schlupffreie Verbindung zwischen den beiden Teilen 35, 36 erreicht. Das Eingriffsteil 37 kann hierbei von einer Kappe 38 mit einer Innenverzahnung gebildet sein, daß am freien Ende der Kolbenstangen einer Kolben-Zylinder-Einheit 39 festgelegt ist. Im geschlossenen Zustand der Kupplungseinrichtung steht die Innenverzahnung der Kappe 38 mit einer Außenverzahnung des als Ritzel ausgebildeten ausgangsseitige Teils 36 in Eingriff. Die Steuerung des Kolbens der Kolben-Zylinder-Einheit 39 erfolgt über eine Steuerungseinrichtung 40. Hierzu erhält die Steuerungseinrichtung 40 als Eingangssignal die Winkelstellung der Eingangswelle 1 oder eines anderen Teils im Übertragungsweg.

Da ein Überholen des ausgangsseitigen Teils 36 durch das eingangsseitige Teil 35 bei einer Kupplungseinrichtung gemäß Fig. 4 verhindert werden kann, ist mit einer solchen Kupplungseinrichtung eine Motorbremse realisierbar. Hierzu müßte der Pendelarm 8 (und eventuell weitere im Übertragungsweg vorhandenen Übertragungselemente) in beide Verschwenkrichtungen formschlüssig geführt sein, beispielsweise durch beidseitig an der Rolle 30 anliegende Mäntel 24 des Exzenters 3 gemäß Fig. 2. Weiters könnte bei einer solchen drehrichtungsabhängigen Kupplungseinrichtung in Abhängigkeit davon, welche der Drehrichtungen des eingangsseitigen Teils 35 auf das ausgangsseitige Teil 36 übertragen wird und in welcher ein Freilauf erfolgt, auch ein Rückwärtsgang des Getriebes realisiert werden.

Die Fig. 5 und 6 zeigen den Verlauf des Drehmomentes vor und nach dem Torsionselement 18 in der Ausgangswelle 15, wobei in Fig. 5 entsprechend den Fig. 1 - 3 nur eine drehrichtungsabhängige Kupplungseinrichtung 14 vorhanden ist und in Fig. 6 entsprechend Fig. 3 zwei drehrichtungsabhängige Kupplungseinrichtungen vorhanden sind. Bei einem erfindungsgemäßen Fahrzeuggetriebe können auch mehrere Übertragungszweige vorgesehen sein. Es wären hierzu mehrere mit der Eingangswelle verbundene Exzenter vorzusehen, die jeweils auf einen Pendelarm wirken, wobei die Pendelarme jeweils mit einer drehrichtungsabhängigen Kupplungseinrichtung verbunden sind, deren ausgangsseitigen Teile auf die gleiche Ausgangswelle wirken, vorzugsweise wechselweise (indem die Exzenter um 180° zueinander versetzt sind). Beim Diagramm von Fig. 6 sind zwei solche um 180° gegeneinander phasenverschobene Übertragungszweige vorgesehen. Die Kurven 44, 44' verdeutlichen jeweils den Drehmomentverlauf vor dem Torsionsfederelement 17 und die Kurven 45, 45' den Drehmomentverlauf nach dem Torsionsfederelement 18.

Wenn beiden Fahrzeugrädern einer vorderen und/oder hinteren Fahrzeugachse jeweils ein eigenes erfindungsgemäßes Fahrzeuggetriebe zugeordnet ist, kann durch eine entsprechende Ansteuerung der Übersetzungsverhältnisse dieser Getriebe auf sehr einfach Weise auch ein Differential realisiert werden.

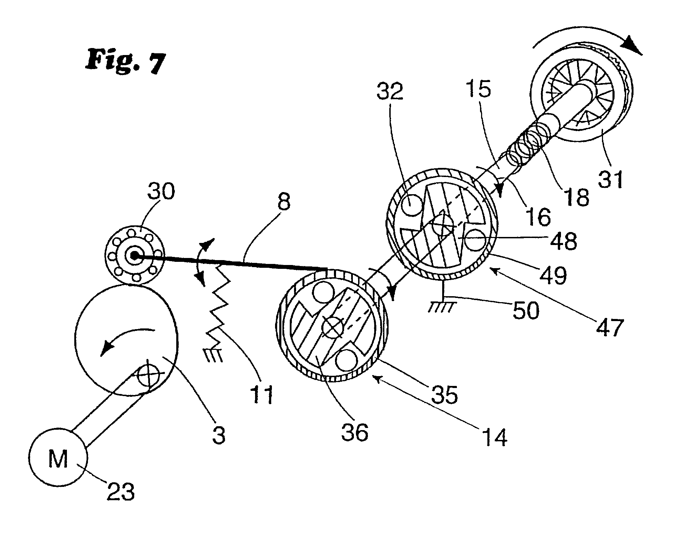

Ein weiteres Ausführungsbeispiel eines erfindungsgemäßen Getriebes ist in schematischer Weise in Fig. 7 dargestellt, wobei Teile, die mit Teilen von zuvor beschriebenen Ausführungsformen funktionsgleich sind oder zumindest analog wirken, mit den gleichen Bezugszeichen versehen sind. Wiederum wird von einem von einem Motor angetriebenen Exzenter 3 ein Pendelarm 8 in eine wechselweise Verschwenkbewegung in beide Verschwenkrichtungen versetzt. Die Art der Verstellung der Exzentrizität des Exzenters 3 ist in Fig. 7 nicht dargestellt, kann aber in analoger Weise wie bei den bereits beschriebenen Ausführungsbeispielen erfolgen. Die drehrichtungsabhängige Kupplungseinrichtung 14 ist wiederum als Freilaufgetriebe ausgebildet, könnte aber auch in analoger Weise wie in Fig. 4 dargestellt ausgebildet sein. In der Ausgangswelle 15 ist ein Torsionsfederelement 18 angeordnet.

In der Ausgangswelle 15 ist bei diesem Ausführungsbeispiel weiters zwischen dem Torsionsfederelement 18 und dem ausgangsseitigen Teil 36 der Kupplungseinrichtung 14 eine Rücklaufsperreinrichtung 47 vorgesehen. Durch diese wird eine Drehung der Ausgangswelle in Richtung des Pfeils 16 freigegeben und in die entgegengesetzte Drehrichtung wird die Drehung der Ausgangswelle gesperrt. Die Rücklaufsperreinrichtung kann hierbei insbesondere in Form einer Freilaufkupplung ausgebildet sein, wie dies in Fig. 7 dargestellt ist. Diese Freilaufkupplung weist einen Rotor 48 auf, der drehfest auf der Ausgangswelle 15 gelagert ist oder von dem beidseitig drehfest mit diesem verbundene Teilwellen der Ausgangswelle 15 ausgehen. Weiters besitzt die Freilaufkupplung einen Stator 49, der drehfest mit dem Gehäuse 50 verbunden ist. Zwischen dem Rotor 48 und dem Stator 49 sind in herkömmlicher Weise Klemmrollen 32 angeordnet.

Die Drehung der Ausgangswelle 15 wird von der Rücklaufsperreinrichtung 47 in derjenigen Drehrichtung freigegeben, in welcher eine Übertragung der Verschwenkbewegung des Pendelarms 8 bzw. der Drehbewegung des eingangsseitigen Teils 35 der Kupplungseinrichtung 14 auf das ausgangsseitige Teil 36 bzw. die Ausgangswelle 15 erfolgt. In dieser Drehrichtung wird bei der Übertragung der Drehung auf das Fahrzeugrad 31 das Torsionsfederelement 18 gespannt. Nach dem Ende der Verschwenkbewegung des Pendelarms 8 in diese Richtung und Umkehrung von dessen Verschwenkrichtung wird durch die Rücklaufsperreinrichtung 47 eine Entspannung des Torsionsfederelements 18 durch Drehung des der Kupplungseinrichtung 14 zugewandten Abschnitts der Ausgangswelle 15 verhindert. Ohne eine solche Rücklaufsperreinrichtung 47 würde durch diese Entspannung des Torsionsfederelements 18 die Schwungmasse des Antriebsmotors 23 beschleunigt, so daß auch in diesem Fall die Restenergie des Torsionsfederelements 18 nicht verloren wäre. Der Einsatz einer Rücklaufsperreinrichtung entsprechend Fig. 7 stellt aber eine zweckmäßige und vorteilhafte Ausgestaltung dar.

Unterschiedliche Modifikationen der gezeigten Ausführungsbeispiele sind denkbar und möglich, ohne den Bereich der Erfindung zu verlassen. So können beispielsweise anders aufgebaute Exzenter bzw. drehrichtungsabhängige Kupplungseinrichtungen eingesetzt werden. Verschiedene unterschiedliche oder zusätzliche Übertragungselemente, wie Hebel oder Zahnräder im Übertragungsweg sind denkbar und möglich.

### Legende

### zu den Hinweisziffern:

- 1: Eingangswelle
- 2: Pfeil
- 3: Exzenter
- 4: Exzenterstab
- 5: Exzenterrolle
- 6: Lagerbock
- 7: Gegengewicht
- 8: Pendelarm
- 9: Achse
- 10: Doppelpfeil
- 11: Zugfeder
- 12: Welle
- 13: Doppelpfeil
- 14: drehrichtungsabhängige Kupplungseinrichtung
- 15: Ausgangswelle
- 16: Pfeil
- 17: Torsionsfederelement
- 18: Torsionsfederelement
- 19: Pfeil
- 20: Rastklinke
- 21: freies Ende
- 22: Lager
- 23: Antriebsmotor
- 24: Mantel
- 25: Kolben-Zylinder-Einheit
- 26: Tauchkolben
- 27: Steuereinheit
- 28: Betätigungselement
- 29: Hydraulikleitung
- 30: Rolle
- 31: Fahrzeugrad
- 32: Klemmrolle
- 33: Hebel
- 34: Schwenkachse
- 35: eingangsseitiges Teil
- 36: ausgangsseitiges Teil
- 37: Eingriffsteil
- 38: Kappe
- 39: Kolben-Zylinder-Einheit
- 40: Steuerungseinheit
- 43: Kuppelstab
- 44, 44': Kurve
- 45, 45': Kurve
- 46: Langlochausnehmung
- 47: Rücklaufsperreinrichtung
- 48: Rotor
- 49: Stator
- 50: Gehäuse

## Patentansprüche

1. Fahrzeuggetriebe mit stufenlos veränderbarer Übersetzung zwischen einer Eingangswelle (1) und einer Ausgangswelle (15) zum Antrieb von mindestens einem Fahrzeugrad (31), mit mindestens einem um eine stationäre Achse (9) verschwenkbar gelagerten Pendelarm (8), der um diese Achse (9) mittels eines Exzenters (3) bei einer Drehung der Eingangswelle (1) in eine wechselweise Verschwenkbewegung in beide Verschwenkrichtungen versetzbar ist, deren Schwenkwinkel zur Änderung der Übersetzung durch Änderung der Exzentrizität des Exzenters (3) veränderbar ist, und mindestens einer drehrichtungsabhängigen Kupplungseinrichtung (14) mit einem eingangsseitigen Teil (35), welches von dem mindestens einen Pendelarm (8) in eine wechselweise Drehbewegung in beide Drehrichtungen versetzbar ist, und einem ausgangsseitigen Teil (36), das mit der Ausgangswelle (15) in Verbindung steht, wobei in Abhängigkeit von der Drehrichtung des eingangsseitigen Teils (35) oder in Abhängigkeit von der relativen Drehrichtung zwischen dem eingangsseitigen Teil (35) und dem ausgangsseitigen Teil (36) entweder eine Übertragung der Drehbewegung des eingangsseitigen Teils (35) auf das ausgangsseitige Teil (36) oder ein Freilauf zwischen dem eingangsseitigen Teil (35) und dem ausgangsseitigen Teil (36) erfolgt, **dadurch gekennzeichnet, daß** daß im Übertragungsweg des Getriebes ein Torsionsfederelement (17, 18) angeordnet ist, wobei bei einer Verdrehung des Torsionsfederelements(17, 18) dieses eine in Richtung der Aufhebung dieser Verdrehung wirkende federelastische Rückstellkraft ausübt.

2. Fahrzeuggetriebe nach Anspruch 1, **dadurch gekennzeichnet, daß** in der Eingangswelle (1) ein Torsionsfederelement (17) angeordnet ist, welches zwei Teilwellen der Eingangswelle (1) verbindet, wobei das Torsionsfederelement (17) bei einer Verdrehung der beiden Teilwellen gegeneinander eine in Richtung der Aufhebung dieser Verdrehung wirkende federelastische Rückstellkraft ausübt.

3. Fahrzeuggetriebe nach Anspruch 1 oder Anspruch 2, **dadurch gekennzeichnet, daß** in der Ausgangswelle (15) ein Torsionsfederelement (18) angeordnet ist, welches zwei Teilwellen der Ausgangswelle (15) verbindet, wobei das Torsionsfederelement (18) bei einer Verdrehung der beiden Teilwellen gegeneinander eine in Richtung der Aufhebung dieser Verdrehung wirkende federelastische Rückstellkraft ausübt.

4. Fahrzeuggetriebe nach einem der Ansprüche 1 bis 3, **dadurch gekennzeichnet, daß** zur Unterbrechung der Kraftübertragung auf die Ausgangswelle (15) des Fahrzeuggetriebes eine Einrichtung zur Feststellung des mit dem Exzenter (3) zusammenwirkenden Pendelarms (8) bzw. Hebels (33) in der am weitesten vom Exzenter (3) beabstandeten Position des Pendelarms (8) bzw. Hebels (33) vorgesehen ist, wobei der Exzenter leer gegenüber dem Pendelarm bzw. Hebel durchdreht.

5. Fahrzeuggetriebe nach einem der Ansprüche 1 bis 4, **dadurch gekennzeichnet, daß** zur Bereitstellung eines Leerganges des Fahrzeuggetriebes die Exzentrizität des Exzenters auf Null verstellbar ist.

6. Fahrzeuggetriebe nach einem der Ansprüche 1 bis 5, **dadurch gekennzeichnet, daß** zur Bereitstellung eines Leerganges des Fahrzeuggetriebes der ausgangsseitige Kraftarm eines im Übertragungsweg angeordneten Hebels (33) auf Null verstellbar ist.

7. Fahrzeuggetriebe nach einem der Ansprüche 1 bis 6, **dadurch gekennzeichnet, daß** das eingangsseitige Teil (35) der drehrichtungsabhängigen Kupplungseinrichtung (14) um die gleiche Achse (9) wie der Pendelarm (8) drehbar gelagert ist, wobei der Pendelarm (8) vorzugsweise drehfest mit dem eingangsseitigen Teil (35) verbunden ist.

8. Fahrzeuggetriebe nach einem der Ansprüche 3 bis 7, **dadurch gekennzeichnet, daß** in der Ausgangswelle (15) zwischen dem Torsionsfederelement (18) und dem ausgangsseitigen Teil (36) der drehrichtungsabhängigen Kupplungseinrichtung (14) weiters eine Rücklaufsperreinrichtung (47) vorgesehen ist, die eine Drehung der Ausgangswelle (15) in eine erste Drehrichtung freigibt und eine Drehung der Ausgangswelle in die zweite Drehrichtung sperrt.

9. Fahrzeuggetriebe nach Anspruch 8, **dadurch gekennzeichnet, daß** die Rücklaufsperreinrichtung eine Freilaufkupplung mit einem mit der Ausgangswelle (15) drehfest verbundenen Rotor (48) und einem mit dem Gehäuse (50) drehfest verbundenen Stator (49) ist.
